(19) Europäisches Patentamt / European Patent Office / Office européen des brevets

(11) **EP 4 101 646 A1**

(12) **EUROPEAN PATENT APPLICATION**

(43) Date of publication:
**14.12.2022 Bulletin 2022/50**

(21) Application number: **21179062.1**

(22) Date of filing: **11.06.2021**

(51) International Patent Classification (IPC):
**B33Y 70/00** (2020.01) **B33Y 80/00** (2015.01)
**C04B 28/04** (2006.01) **C04B 28/06** (2006.01)

(52) Cooperative Patent Classification (CPC):
(C-Sets available)
**B33Y 70/00; B33Y 80/00; C04B 28/04;**
**C04B 28/06; C04B 28/065;** C04B 2111/00181;
C04B 2111/10 (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **HeidelbergCement AG**
**69120 Heidelberg (DE)**

(72) Inventors:
• **Marchi, Maurizio Iler**
**20066 MELZO (IT)**
• **Setti, Luca**
**16015 Casella (IT)**
• **Palomba, Martina**
**69115 Heidelberg (DE)**

(74) Representative: **Zellentin & Partner mbB**
**Patentanwälte**
**Rubensstraße 30**
**67061 Ludwigshafen (DE)**

(54) **CONCRETE COMPOSITION FOR 3D PRINTING**

(57) Cementitious mixture comprising a hydraulic cement, a filler and aggregate with a maximum size above 2 mm, wherein the composition has a Dinger-Funk particle size distribution modulus $q_{D-F}$ in the range from 0.20 to 0.30, a cement content from 1 to 40 wt.-% with respect to the total weight of dry components, and no combination of clay and silica fume is contained and concrete composition containing it and water, having an excess paste thickness in the range from 5 to 35 $\mu$m, which is printable with a 3D printer, and use thereof for as well as method using it for the production of buildings and building elements by a 3D printing device.

EP 4 101 646 A1

(52) Cooperative Patent Classification (CPC): (Cont.)

C-Sets
**C04B 28/04, C04B 14/06, C04B 14/06,
C04B 14/28, C04B 14/28, C04B 14/303,
C04B 14/48, C04B 16/06, C04B 20/0076,
C04B 22/085, C04B 22/10, C04B 22/124,
C04B 22/147, C04B 24/124, C04B 24/2623,
C04B 24/2647, C04B 24/38, C04B 24/383;
C04B 28/04, C04B 14/06, C04B 14/06,
C04B 14/28, C04B 14/28, C04B 14/48,
C04B 16/06, C04B 20/0076, C04B 24/124,
C04B 24/2623, C04B 24/38, C04B 24/383,
C04B 2103/32;
C04B 28/04, C04B 14/06, C04B 14/06,
C04B 14/28, C04B 14/28, C04B 14/48,
C04B 16/06, C04B 20/0076, C04B 2103/0079,
C04B 2103/32;
C04B 28/06, C04B 14/06, C04B 14/06,
C04B 14/28, C04B 14/28, C04B 14/48,
C04B 16/06, C04B 20/0076, C04B 2103/0079,
C04B 2103/32;
C04B 28/065, C04B 14/06, C04B 14/06,
C04B 14/28, C04B 14/28, C04B 14/48,
C04B 16/06, C04B 20/0076, C04B 2103/0079,
C04B 2103/32**

**Description**

The present invention relates to a cementitious mixture and to a concrete composition from it which is printable with a 3D printer, and to its use for as well as to a method for the production of buildings and building elements by a 3D printing device.

3D printing has become an established technology for prototyping as well as for robotic production. There are also many proposals for producing building elements and buildings from cementitious mixtures with a 3D printer. For example, EP 3 421 201 A1 and WO 2018/128791 A1 propose mixtures for 3D printing comprising cement or a hydraulic binder, filler, aggregates, admixtures, and water, wherein selection of the admixtures (called additives therein) and restricting aggregate size to ≤ 2 mm or ≤ 1 mm, respectively, allows to print also complex forms. Based on the aggregate size the compositions are mortars, not concretes. US 2019/0009428 A1 describes a specific cement for 3D printing of building elements and buildings, the problem of aggregate size is not discussed. According to US 2018/00574054 A1 it is possible to print concrete compositions made from the combination of a solid mix, water, and various liquid admixtures, wherein the solid mix includes quantities of aggregate with a maximum size of 9.5 mm, coarse sand, and fine sand in an approximately 1:1:1 critical aggregate ratio, as well as a binding agent present in a critical binding ratio and solid additions (called solid admixtures therein) including a combination of clay, fly ash, and silica fume.

High amounts of specific admixtures and additives like clay and silica fume as well as especially restrictions on useable aggregate impair acceptance and use of 3D printing for building. Especially, coarse aggregate, i.e. with sizes above 2 mm or better ≥ 4 mm, is needed to provide compositions with usual cement amount which in turn is needed to avoid an extensive carbon dioxide footprint and obtain high strength.

Thus, in spite of the known printable compositions there is still a need for compositions that are nearer to ordinary concrete. The problem to solve for printable concrete compositions is ensuring smooth flow inside the printer and restricting slump of the printed paste at the same time. Further, the necessary delay until the next layer can be printed should be as short as possible. The requirements on concrete in the fresh state for its application in 3D printing by extrusion are especially:

- The concrete must be able to be delivered to the point of placement by making it flow through a hose or any kind of conduit, preferably by pumping (pumpability).
- The concrete must be able to be delivered through an exit nozzle and retain its shape (extrudability).
- The concrete must substantially retain its shape during the construction process essentially consisting of a layer-by-layer piling up, and proper adhesion between contacting layers has to be assured (buildability).

Therefore, the right balance must be found for a formulation as the different requirements are antithetical. Therefore the object of providing printable concrete as opposed to mortars without complex admixtures and/or additives remains to be solved.

Surprisingly it was now found that a printable concrete can be obtained by designing the mixture with a specific proportion of hydraulic cement in such a way that the particle size distribution follows a Dinger-Funk distribution with an appropriate modulus qD-F, and tuning the amount of paste in order to simultaneously obtain a certain excess paste thickness.

Thus, the above mentioned object is solved by a cementitious mixture comprising a hydraulic cement, a filler, and aggregate with a maximum size above 2 mm, wherein the mixture has a Dinger-Funk particle size distribution modulus qD-F in the range from 0.20 to 0.30, a hydraulic cement content from 1 to 40 wt.-% with respect to the total dry mixture weight, and no clay or silica fume are contained. The problem is also solved by a concrete composition comprising a hydraulic cement, a filler, aggregate with a maximum size above 2 mm, and water, wherein the mixture has a Dinger-Funk particle size distribution modulus qD-F in the range from 0.20 to 0.30, an excess paste thickness in the range from 5 to 35 μm, a cement content from 1 to 40 wt.-% with respect to the total weight of dry components, and no clay or silica fume are contained. Still further, the object is solved by a use of the cement mixture or concrete composition for producing buildings and building elements by 3D printing as well as by a method for producing buildings and building elements by 3D printing of the cement mixture or concrete composition.

Advantageously, the desired properties for a printable concrete composition or cement mixture to provide it by mixing with water can be obtained without the necessity of using special materials such as silica fumes, clays or organoclays and with aggregate sizes above 2 mm and above 4 mm. There is a synergistic effect involving particle size distribution modulus qD-F, excess paste thickness and the amount of hydraulic cement contained in a paste, so that the properties of the fresh concrete are not explainable by mere superposition of individual effects. The specific qD-F usually associated with easily flowable cementitious materials (such as self-flowing and self-leveling castables), surprisingly provides a concrete able to substantially retain its shape once a layer is extruded through a nozzle while it ensures a suitable extrudability in order to be efficiently delivered through the nozzle of the printer.

Herein, aggregate designates a granular material, such as sand, gravel, crushed stone, crushed waste concrete, crushed iron blast-furnace slag, etc., used with a binder to produce for example concrete or mortar. Coarse aggregate designates the larger aggregate sizes with a $D_{max}$ greater than 2 or $\geq$ 4 mm and a $d_{min}$ greater than or equal to 1 mm. Fine aggregate designates the smaller aggregate sizes with $D_{max}$ less than or equal to 4 mm and $d_{min} = 0$. Therein, 0 means particle sizes passing the smallest sieve used to determine particle size distribution (abbreviated PSD herein) of aggregate, as usual in the cement field, see ISO 19595. Typically, this corresponds to sizes below 0.063 mm.

More or less inert particles with a high fineness are designated fillers. Filler is defined by the standard EN 12620-1 as an aggregate, most of which passes a 0.063 mm sieve. Further, supplementary cementitious materials (abbreviated SCM) can be added, which als have a high fineness. In contrast to fillers, together with which they are designated mineral additions, they take part in the hydraulic reaction. Latent hydraulic materials contain both calcium and silicium/aluminium so that they merely need an activation to hydrate within useful times. Pozzolans are characterized by high silicium and/or alumnium contents but typically have low or no calcium. Thus, they need combination with a source of calcium, e.g. portlandite formed by hydration of Portland Cement clinker, to form strength providing silcate-hydrates, aluminate-hydrates, and silicate-aluminate-hydrates. The use of SCMs is quite common, typical SCMs are ground granulated blast furnace slag, fly ash with high (class C) or low (class F) calcium content, natural pozzolans like volcanic ashes and glasses, calcined clay, trass, and silica fume.

Hydraulic cement is a cement that sets and hardens by chemical reaction with water (hydration) and is capable of doing so under water. The hydration reactions result in the formation of a hard solid mass. The term hydraulic cement most often denotes a clinker ground with or without further components, but also mixtures like super sulphated cement, geopolymer binder, and hydraulic materials not obtained by sintering like a dicalcium silicate obtained by hydrothermal treatment and tempering/reactive grinding.

Concrete is a composite material that comprises a mixture of hydraulic cement, aggregates, and water, with or without admixtures, additives, or other cementitious materials. Mortar is a mixture of hydraulic cement, water and fine aggregate. In fresh concrete, the material occupying the interstices among particles of coarse aggregate equals mortar; in masonry construction, joint mortar may contain masonry cement, or may contain hydraulic cement with lime (and possibly other admixtures) to afford greater plasticity and workability than are attainable with standard Portland cement mortar.

According to the present invention the combination of sufficient fluidity for 3D printing and necessary shape retention of the printed mass under self-weight as well as ability to withstand the load of subsequently printed layers is achieved with a specific hydraulic cement amount together with selected particle sizes of hydraulic cement, filler and aggregate. While admixtures and additives can be used, they are not necessary and in particular, no combination of clay and silica fume is contained, preferably no combination of silica fume, fly ash and clay. Most preferred the cementitious mixture and concrete composition is substantially free of clay. As opposed to calcined clay suitable as pozzolan, clay has a high surface and is problematic in concrete.

Concerning the particle size distribution, rheological performance is significantly affected by the packing fraction of a system. Particle packing density of a powder mix can be defined as the volume of solids in a unit volume; it can also be expressed as unity minus the porosity. Typical concrete is a system of multiple components with common particles sizes from tens of mm to 0.1 $\mu$m. The particles should be selected and arranged in such a way to fill up the voids between larger particles with smaller ones and so on hence achieving a high packing density. At the same water content, higher packing density could improve the flowability of concrete by releasing excess water, which otherwise would be entrapped in the pores. Hence, the cement paste will have more water for lubrication. Alternatively, it would improve the strength of the concrete at the same water content without compromising flowability.

In optimisation of particle size distribution (abbreviated PSD herein), the mixtures are usually designed in order to follow as much as possible predefined grading curves by combining the available granulometric fractions found on the market, each one having a well-defined particle size distribution. The first of such grading curves was presented by Fuller and Thompson (Fuller, W.B. and Thompson, S.E. (1907) The laws of proportioning concrete. ASCE J. Transport., Vol. 59, pp. 67-143.). The Fuller and Thompson curve follows equation 1:

$$P = \left(\frac{D}{D_{max}}\right)^q$$

where P = fraction that can pass the sieve with opening D; and $D_{max}$ = maximum particle size of the mixture. The dimensionless parameter q is often referred to as "distribution modulus", and the Fuller and Thompson curve uses a value of q equal to 0.5. Andreasen and Andersen performed a further study on the Fuller and Thompson model and presented a semi empirical packing model of continuous particle size distributions, which obeys the same equation. Andreasen and Andersen proposed a value of q between 0.33 to 0.5 and found that optimum packing is obtained when q is 0.37, see Andreasen, A.H.M., and Andersen, J. "Uber die Beziehung zwischen Kornabstufung und Zwischenraum in Produkten aus losen Körnern (mit einigen Experimenten)", Colloid Polym. Sci., 50(3) (1930), 217-228.

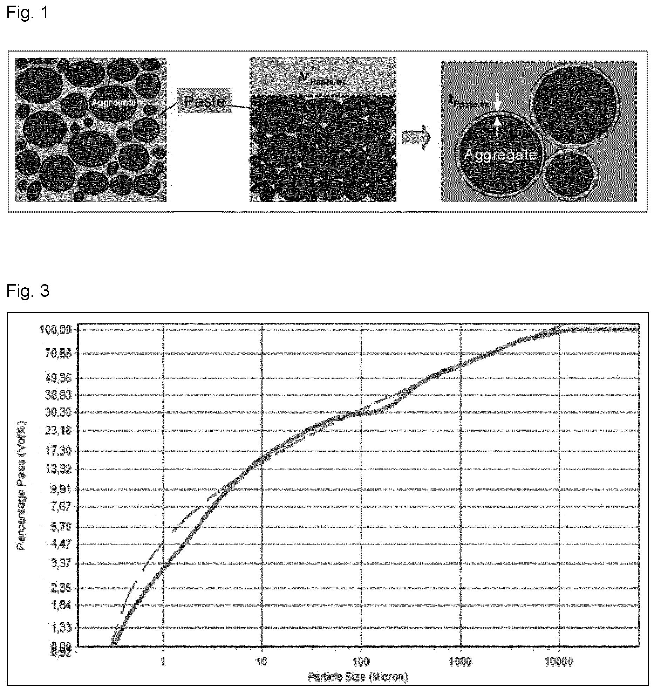

However, this model fails to give the best packing in case of granular mixtures with a high amount of fines (< 250 μm). With a lower value, more fine particles will be present in the mix to fill the voids between larger particles, and to provide a slight loosening effect which enhances flow characteristics, thus preventing internal friction phenomena. In this regard, cementitious mixtures with water in the fresh state can be seen as a two-phase suspension where particles are enveloped by a layer of excess paste that reduces friction in the aggregate skeleton by separating and lubricating those particles, see figure 1, reproduced from Reinhardt et al., "About the influence of the cement content and composition of the aggregates on the rheological behaviour of self-compacting concrete", Materials and Structures (2006) 39:683-693. The paste itself is composed of cement, possibly fine particles and water. The model assumes that concrete consists of the fluid phase paste and the solid phase aggregates. The solid-fluid interactions respective the solid-solid interactions are controlled by the so-called excess paste thickness t which is equivalent to half the distance between two neighbouring aggregates, if the distance is assumed to be independent of the aggregate size. Said excess paste thickness is only partially correlated with the distribution modulus q. The excess paste thickness t can be determined if the excess paste volume $V_{Paste,ex,}$ that remains after the voids between the aggregates $V_{A,void}$ are filled with paste, is constantly layered on the surface of the aggregates.

$$V_{paste,ex} = V_{paste} - V_{A,void} = V_{paste} - \frac{m_A}{\rho_A}\left(\frac{\rho_A}{\rho_{A,bulk}} - 1\right)$$

wherein:

$V_{paste}$ = paste volume
$m_A$ = mass of aggregate
$\rho_A$ = density of aggregate
$\rho_{A,bulk}$ = loose bulk density of aggregates.

The excess paste thickness t can be calculated solving the 3$^{rd}$ grade equation 2 below, according to the mentioned paper by Reinhardt et al.:

$$V_{paste,ex} = \frac{4}{3}\pi \sum_{i=1}^{k} n_i((r_i + t)^3 - r_i^3)$$

wherein:

$V_{paste,ex}$ = excess paste volume
k = number of particle size classes
$n_i$ = number of particles in the "i - th" class
$r_i$ = radius of particles in the "i - th" class
t = excess paste thickness.

As refinement of the PSD theory, J.E. Funk, D.R. Dinger, "Introduction to predictive process control", Predictive process control of crowded particulate suspensions, Springer, New York, (1994) 1 -16, suggested that any real size distribution of particles must have a finite lower size limit. Thus, they modified the Andreasen-Andersen curve. This modified version of the model incorporated the minimum particle size in the mixture as equation 3:

$$P = \left(\frac{D - D_{min}}{D_{max} - D_{min}}\right)^{q_{D-F}}$$

where $D_{min}$ is the minimum particle size in the mix; and all the other parameters are as defined previously. In order to clearly distinguish the moduli herein, the Dinger-Funk distribution modulus is abbreviated as $q_{D-F}$.

Further work on the particle size distribution models in the field of refractory castables has shown that for good flowability in the refractory castable field the modulus qD-F must be between 0.2 to 0.3. Studies also showed that qD-F values close to 0.3 result in vibratable castables (which significantly increase their flowability when mechanical vibration is imposed) while a qD-F < 0.25 results in castables with self-flowability (that move considerably under their own weight, being able to fill intricate forms), see R. Sarkar, "Particle Size Distribution for Refractory Castables: A Review", Interceram 65(3) (2016), 82 - 86.

While this theoretical background was known, it failed to enable the definition of a suitable mix design for a reliable 3D printable concrete composition and cementitious mixture. It was found essential to adjust the excess paste thickness, modulus qD-F and amount of hydraulic cement in combination to meet all requirements concurrently.

Therefore, a printable concrete can be obtained by designing the mixture in such a way that the particle size distribution follows a Dinger-Funk distribution with a modulus qD-F from 0.20 to 0.30, tuning the amount of paste in order to simultaneously obtain an excess paste thickness from 5 to 35 $\mu$m, and selecting an amount of hydraulic cement from 1 to 40 wt.-% with respect to the total weight of all dry components. Advantageously, the desired properties can be obtained without the necessity of using special materials such as silica fume, clay or organoclay while coarse aggregate can be used and no special admixture system is needed. The material properties can be measured with rotational rheometry, and preferably are as follows:

- plastic viscosity in the range from 120 - 300 Pa·s,
- dynamic yield stress in the range from 750 - 1,800 Pa, and
- static yield stress $\geq$ 2,400 Pa.

Although intended for mortar and not for concrete testing, the flow table consistency according to EN 1015-3 also provides information about material suitability. Typically, values comprised in the range from 120 - 140 mm indicate useful mixtures.

One important feature of the cementitious mixture and concrete composition is a particle size distribution modulus $q_{D-F}$ comprised in the range from 0.20 - 0.30 according to the invention, preferably from 0.20 - 0.25, most preferred from 0.20 - 0.23.

Particle sizes are measured herein by sieving for sizes with a minimum size above approximately 1 or 2 mm (e.g. for aggregate) and with laser diffraction analysis for particle sizes with a maximum size below approximately 1 or 2 mm (e.g. for cement, filler and SCM).

Another important feature is the excess paste thickness which ranges from 5-35 $\mu$m, preferably from 10 - 27 $\mu$m, for concrete compositions according to the invention. The excess paste thickness is determined as described above.

The hydraulic cement content ranges from 1 - 40 wt.-%, preferably from 10 - 35 wt.-%, most preferred from 15 - 30 wt.-%, referred to the solids in the mixture or composition.

Generally, suitable hydraulic cements for the cementitious mixture and concrete composition according to the present invention are Portland clinker containing cement, sulfoaluminate cement, aluminous cement, fast natural cement of the "Roman cement" type, and mixtures thereof.

Taking into account the needs that characterise printing processes, a suitable concrete composition for 3D printing is a mixture with a rapid setting and hardening, which comprises as main binder a hydraulic cement, preferably a fast binder selected from aluminous cement and/or sulfoaluminate cement and/or Portland cement, possibly with additives or accelerated.

Portland cement (OPC) is produced by pulverizing Portland cement clinker which typically comprise at least two-thirds by mass of calcium silicates, specifically $2\ CaO \cdot SiO_2$ and $3\ CaO \cdot SiO_2$, the remainder being aluminium- and iron-containing clinker phases and other compounds. According to EN 197-1 the ratio of CaO to $SiO_2$ shall not be less than 2.0 and the magnesium oxide content (MgO) shall not exceed 5.0 wt.-%. Portland cement is designated CEM I in EN 197-1. Other Portland cement clinker based cements inside and outside the standard are also possible, however, filler is a mandatory component of the cementitious mixture and concrete composition according to the invention. Portland cement clinker based cements preferably have a strength class 42.5 or 52.5, with an ordinary (N) or high (R) initial strength class, preferably with high initial strength class. The most preferred Portland cement clinker based cement types are CEM I and CEM II types. Among CEM II cements, the preferred ones are the Portland-limestone cements CEM II/A-L, CEM II/B-L, CEM II/A-LL, and CEM II/B-LL. In those the contained limestone can consitute all or a part of the necessary filler.

Sulfoaluminate cement is obtained by grinding sulfoaluminate clinker and adding variable quantities of calcium sulfate, lime, limestone and other components as described by the standard EN 197-1 for Portland clinker containing cements. There are various examples of sulfoaluminate clinkers and cements on the market and described in patents. Sulfoaluminate clinkers or cements on the market are for example: Lafarge Rockfast®, Italcementi Alipre®, Buzzi Next® clinker, Vicat Alpenat® S, Denka® CSA and those described in the Chinese standard GB 20472-2006. These are all suitable. Further suitable sulfoaluminate clinkers and cements are described for example in EP 812 811 A1, US 2013/0233207 A1, WO 2013/023728 A2, and US 2014/0364543 A1.

Aluminous cements and fast natural cements are also possible. Aluminous cements are based on calcium aluminate clinkers like $CaO \cdot Al_2O_3$, $12CaO \cdot 7Al_2O_3$ etc. and are available commercially. They are made by fusing together a mixture of a calcium-bearing material (like calcium oxide from limestone) and an aluminium-bearing material (typically bauxite). Fast natural cements, also designated Roman cements, are made by burning a raw material comprising clay and limestone or dolomite, often a marl, below the sintering temperature and grinding. The hydraulic cement can also be a mixture of hydraulic cements.

Further, as mentioned before composite cements comprising supplementary cementitious materials are useful as hydraulic cement. A supplementary cementitious material (SCM) is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions. OPC based composite cements are preferred as hydraulic cement, most preferred ones comprising latent hydraulic or highly reactive pozzolanic SCM.

The cementitious mixture and concrete composition include a filler with a typical $d_{min} < 1\ \mu m$ to obtain the desired particle size distribution providing the $q_{d-f}$ and adjusting excess paste thickness. The filler according to the present invention can be an aggregate most of which passes a 0.063 mm sieve, as defined by the standard EN 12620-1. Thus, a very fine fraction of the aggregate can constitute at least a part of the filler when the PSD covers the appropriate sizes. Other more or less inert materials with approppriate PSD, especially ground minerals, but also synthetic materials, are also possible, e.g. dolomite, fines from concrete demolition waste, clinker kiln dust, and others.

Usually, the filler comprises particles with a $D_{90}$ of 0.063 mm and preferably with a $D_{10}$ of $< 1\ \mu m$, more preferred $\leq 0.5\ \mu m$ and most preferred $\leq 0.1\ \mu m$. Preferred fillers according to the present invention are limestone, siliceous or silico-calcareous fillers, more preferably limestone fillers, alone or in a mixture with for example, but not exclusively, dolomite, fines from concrete demolition waste, clinker kiln dust, and mixtures thereof. Typically, with respect to the total solids content of the mixture or composition there are 5 to 40 wt.-%, preferably 10 to 30 wt.-%, filler present.

The aggregate contained in the cementitious mixture and concrete composition according to the invention comprises coarse aggregate with a $D_{max}$ of at least 2 mm, preferably $\geq 4$ mm. Typically, $D_{max}$ is $\leq 20$ mm, preferably $\leq 12$ mm, most preferred $\leq 8$ mm, and/or $d_{min}$ is $\geq 1$ mm, preferably $\geq 2$ mm, most preferred $\geq 4$ mm. In addition, fine aggregate can and usually is contained, i.e. with a $D_{max} \leq 4$ mm, preferably $\leq 2$ mm. Typically, the fine aggregate has a $d_{min} \geq 0.1$ mm or $\geq 0.2$ mm. Generally, aggregates for use in cementitious mixtures and concrete compositions are defined in the standard EN 206 and standard EN 12620 as a natural, artificial, reclaimed or recycled granular mineral constituent suitable for use in concrete. According to the present invention, the aggregate can be any known aggregate, preferably it is a calcareous, siliceous or silico-calcareous aggregate which is a known and commonly available product. The amount of aggregate generally ranges from 10 to 80 wt.-% with respect to the total solids content of the cementitious mixture or concrete composition, preferably from 30 to 70 wt.-%.

According to the present invention the cementitious mixture and concrete composition can further contain fibres, including polymeric fibres, metallic fibres, in order to enhance the stability of the fresh material and to provide a diffused reinforcement. Advantageously, said fibres can increase their orientation degree during the extrusion, thereby improving the mechanical properties of the finished product, i.e. building or building element.

Taking into account the needs that characterise printing processes, the concrete mixture can further comprise admixtures accelerating the setting and/or hardening so as to increase the vertical progress of the printing process. When the hydraulic binder is Portland clinker containing cement, suitable admixtures for this purpose are, for example but not limited to, lithium carbonate, sodium carbonate, sodium chloride, aluminium hydroxide, aluminium sulphate, lithium sulfate, calcium nitrate, and calcium nitrite. Preferably lithium carbonate and/or sodium carbonate are used.

The cementitious mixture and concrete composition according to the present invention preferably comprises one or more superplasticisers (also known as high range water reducers). Their use, as is known in the art, allows the desired rheological characteristics to be optimised within the formulation. Among superplasticisers, acrylic-based polycarboxylates are preferred, dosed in relation to the temperature of the mixture, the environmental temperature and the degree of fluidity required in the formulation. Other possible superplasticisers are lignosulfonates, naphthalene sulfonates, melamine compounds, and vinyl compounds. The superplasticisers are usually present in an amount ranging from 0.01 wt.-% to 1.00 wt.-% referred to the weight of the solid mix, preferably from 0.03 wt.-% to 0.50 wt.-%, even more preferred from 0.04 wt.-% to 0.20 wt.-%.

According to the present invention the cementitious mixture and concrete composition preferably also comprises a rheology modifying agent, i.e. an admixture capable of modifying the water retention, material cohesion and adhesion characteristics to the support. These admixtures are able to increase the viscosity of the product in order to avoid segregation.

The rheology modifying agent according to the present invention is preferably "a rheology modifying system", i.e. at least two rheology modifying agents, said system comprising 1) one or more rheology modifying agents having a pseudo plastic behaviour, such as long-chain polysaccharides or high-molecular-weight hetero-polysaccharides with or without substituent groups bound to the hydroxyl groups of the pyranose rings and 2) high-molecular weight polymers. The rheology modifying system is capable of improving the mixing by adjusting rheological properties, reducing the mixing time itself. The rheology modifying agent(s) can be included in the present formulation to reduce surface water bleeding and the presence of fine particles on the surface of the prepared material, and also to increase the viscosity and uniformity of the cementitious formulation.

Said rheology modifying agents 1) are typically selected from the group of starch derivatives, vinyl-acetate, vinyl-versatate, cellulose, cellulose derivatives, and mixtures thereof, preferably cellulose derivatives. Usually they are present in an amount ranging from 0.003 wt.-% to 0.500 wt.-% referred to the weight of the solid mix, preferably from 0.005 wt.-% to 0.100 wt.-%, even more preferred from 0.006 wt.-% to 0.050 wt.-%. Preferred cellulose derivatives include hydroxymethyl-cellulose, hydroxyethylcellulose, hydroxymethylpropylcellulose, carboxymethylcellulose, methylcellulose, and hydroxymethylethylcellulose, most preferred hydroxymethylethylcellulose.

The high-molecular-weight polymers 2), also called high-molecular-weight polymeric stabilizers, are typically polyamides, preferably polyamides with substituted amide nitrogen, having a molecular weight ranging from $2\cdot10^6$ Da to $2\cdot10^7$ Da, preferably from $2\cdot10^6$ Da to $5\cdot10^6$ Da. Said high-molecular weight polymer 2) is usually present in an amount from 0.009 wt.-% to 0.500 wt.-% referred to the weight of the solid mix, preferably from 0.010 wt.-% to 0.300 wt.-%.

In one preferred embodiment the superplasticiser and the rheology modifying system are both present, wherein preferably their weight ratio ranges from 0.5 to 2.2, more preferred from 0.7 to 1.3.

Further, known admixtures, such as but not limted to setting retarders, and/or additives, such as but not limited to pigments, are also possible and if used are present in their known and usual dosage.

The concrete composition according to the present invention preferably has a water/solid weight ratio ranging from 0.05 to 0.15, preferably from 0.06 to 0.13, most preferred from 0.08 to 0.11. This provides concrete compositions with the necessary excess paste thickness when the Dinger-Funk particle size distribution modulus ranges from 0.20 to 0.30.

In the method according to the invention the cementitious mixture or concrete composition according to the invention is used for producing buildings or building elements by 3D printing according to the invention. Specifically, the printing process comprises the following steps:

    i) providing the cementitious mixture according to the invention and mixing with water to provide a concrete composition with an excess paste thickness from 5 to 35 $\mu$m, or providing the concrete composition according to the invention,

    ii) feeding the concrete composition to a 3D printing device,

    iii) extrusion of the concrete composition from a nozzle of the 3D printing device and depositing the concrete composition onto a substrate in a layer with a predetermined arrangement of the concrete compositionin the layer according to a 3D model,

    iv) repeating step iii) until the 3D model is printed by the deposition of consecutive layers of the concrete composition.

The 3D model is usually obtained by creation as 3D CAD object, sectioning into horizontal layers and storing the map (arrangement for concrete composition deposit) of each layer. As is known per se, the 3D model is maintained in the form of digital data converted into instructions for the 3D printing device and stored in a controller. The controller positions the nozzle for deposition of the concrete composition. The controller also controls the flow of the concrete composition through the nozzle, i.e. the amount deposited at a particular point in the layer. Further, the controller adjusts the time until the next layer is printed so that the layer below has enough strength to support the next layer but still allows complete adhesion between the layers. Usually, printing speed is from 10 to 1000 mm/sec, typically 100 - 250 mm/sec. Usual layer thicknesses range from 2 to 40 cm, typically from 4 to 10 cm. The time between printing layers is suitably from 10 sec to 20 minutes, typically from 30 sec to 10 min.

The substrate is the foundation in case of a building being printed. Typically, it is more efficient to cast the ground plate, but it can also be printed. During printing of the walls and floors/ceilings openings and ducts are preferably formed, i.e. no deposition of concrete composition at appropriate points in the layers, as needed for doors and windows as well as pipes and wires.

Building elements are printed on suitable supports as substrates, from which they can be easily taken off after sufficient hardening. Building elements can be walls, floors, stairs, all with appropriate openings/ducts as mentioned for buildings, as well as slabs, pillars, posts, plates, blocks, tubes, arches, pavement, and even more complicated elements like tables, benches, fountain basins, plant containers, and ornamental objects, e.g. figurines and artificial rocks. Any shape is possible, even intricate ones.

Reinforcement for increasing ductility can be used; they can be traditional steel rebars, post or pre tensioned systems, steel cables, diffuse reinforcement (steel fibers) or fiber reinforce polymers (FRP). Reinforcement can be added in the concrete mix (e.g. steel fibers), during the printing (e.g. steel cables and steel-rebars), or on finished printed elements (post or pre tensioned systems or FRP).

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

Examples

For all examples the laboratory preparation of the material has been:

- dry weighing of the constituents
- manual rough homogenization
- water addition in a planetary mixer
- mixing at 140 rpm for 4'30"
- pouring the material in a rotational rheometer for the flow curve test and stress growth test.

The experimental setup of the 4-orthogonal blade rheometer is reported in table 1. Fresh concrete density is measured according to EN 12350-6, while flow table consistency is measured analogously to the method described in EN 1015-3.

Table 1

| Germann Instruments ICAR Plus rheometer | |
|---|---|
| **Geometry** | |
| Vane Radius [mm] | 50.0 |
| Vane Height [mm] | 100.0 |
| Container Radius [mm] | 108.2 |
| **Flow Curve test** | |
| Breakdown Time [s] | 20.0 |
| Breakdown Speed [rps] | 0.300 |
| Initial Speed [rps] | 0.660 |
| Final Speed [rps] | 0.050 |
| Number of Points [-] | 10 |
| Time Per Point [s] | 15.0 |
| **Stress Growth test** | |
| Speed [rps] | 0.025 |
| Test time [s] | 15.0 |

The hydraulic cements used in the reported formulations were obtained from Italcementi S.p.A., IT:

-    CEM I 52.5R produced at the Rezzato (Italy) plant or Calusco d'Adda (Italy) plant; the origin is specified within the tables;
-    CEM II A-LL 42.5R produced at the Calusco d'Adda (Italy) plant, having a clinker content of 80% by weight;
-    Sulfoaluminate cement i.tech Alicem Green, produced at Guardiaregia (Italy).

The ground granulated blast furnace slag (GGBFS) included in the reported formulations was a granular blast furnace slag with the tradename of "Loppa di altoforno granulata macinata" compliant with EN 15167-1, having a specific surface equal to 4,450 $cm^2/g$ (determined according to the Blaine method according to the standard EN 196-6), obtained from Ecocem France SAS, FR.

The calcareous filler was a limestone-based filler marketed by Omya S.p.A., IT, under the tradename of Omyacarb 2-AV. Another calcareous limestone-based filler marketed by Cremaschi Granulati S.r.l., IT, has also been used where indicated, in order to have a better particle size distribution fitting.

The aggregates were different granulometric fractions of silico-calcareous aggregates marketed by Sabbie Sataf s.r.l., IT.

The superplasticizer was based on polycarboxylic ether, called Melflux 2641 F, and marketed in powder form by BASF SE, DE. The rheology modifier 1 was a hydroxymethylethylcellulose, "Tylose MH 60004P6", marketed in powder form by ShinEtsu, JP. The rheology modifier 2 was a high-molecular weight synthetic polymer, more specifically a polyamide with the amide nitrogen substituted with a molecular weight approximately equal to $2 \cdot 10^6$ Da, called Starvis 3040F marketed in powder form by BASF SE, DE.

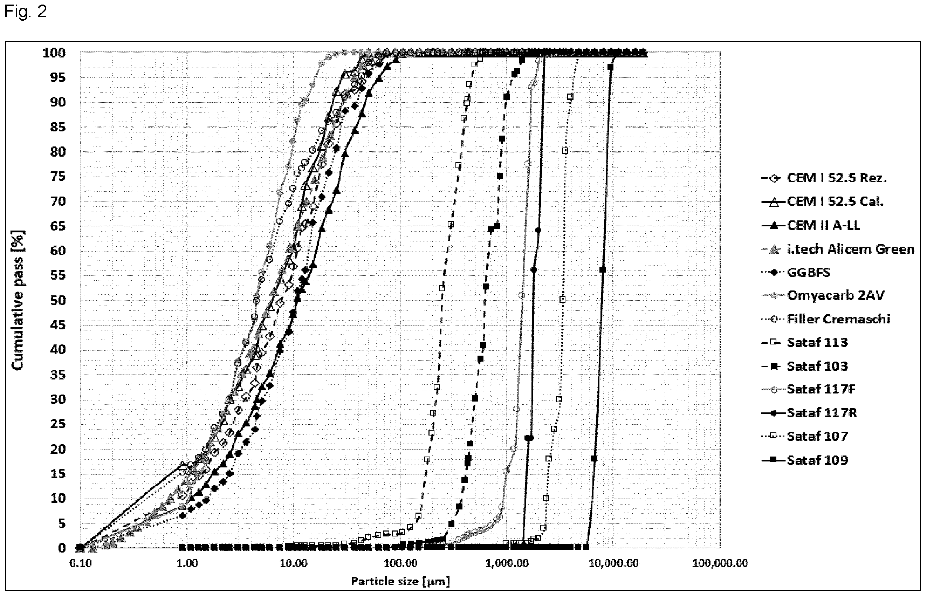

The particle size distributions of the individual components adopted to illustrate the main aspects of the present invention are shown in figure 2. Said particle size distributions have been measured adopting a laser analyzer for the fractions up to 2 mm, while for the remaining coarser fraction determination by sieving has been carried out according to the standard EN 933-1.

Example 1

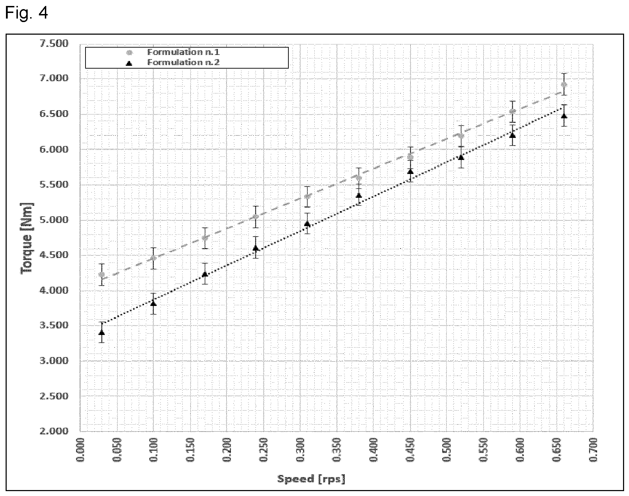

Two concrete compositions were made with the components and amounts listed in table 2. As for all examples, the the weight percentages of the main components, indicated as wt.-%*, are referred to the solid mix, and sum up to 100%. The weight percentages of the admixtures, wt.-%**, are calculated on the solid mix constituted by the main components. The weight percentage of water, wt.-%***, is calculated on the overall weight of main components and admixtures. The particle size distributions of formulations n.1 and n.2 are reported in figure 3, fitted with a Dinger-Funk distribution (dashed line) having $d_{min}$ = 0.2 mm, $D_{max}$ = 8 mm, and qD-F = 0.22 as reported in table 2. Stress growth test, flow curve test (figure 4), and flow table consistency have been carried out on the fresh concrete. The raw data have been processed according to the methods described and the results are also reported in table 2.

Table 2

| Formulation | n.1 | | n.2 | |
|---|---|---|---|---|
| Main Components | wt.-%* | Kg/m³ of concrete | wt.-%* | Kg/m³ of concrete |
| Cem II/A-LL 42.5RCalusco | 28 | 595.8 | 28 | 595.8 |
| Filler Cremaschi | 10 | 212.8 | 10 | 212.8 |
| Sataf 107 | 12 | 255.3 | 12 | 255.3 |
| Sataf 117R | 16 | 340.4 | 16 | 340.4 |
| Sataf 103 | 18 | 383.0 | 18 | 383.0 |
| Sataf 109 | 16 | 340.4 | 16 | 340.4 |
| Admixtures | wt.-%** | Kg/m³ of concrete | wt.-%** | Kg/m³ of concrete |
| Melflux 2641F | 0.055 | 1.106 | 0.0495 | 1.053 |
| Tylose MH60004P6 | 0.0085 | 0.181 | 0.0085 | 0.181 |
| Starvis 3040F | 0.050 | 1.043 | 0.0550 | 1.170 |

(continued)

| Water | wt.-%*** | Kg/m³ of concrete | wt.-%*** | Kg/m³ of concrete |
|---|---|---|---|---|
| Water | 10 | 212.8 | 10 | 212.8 |
| **Material properties** | | | | |
| $q_{D-F}$ | | 0.22 | | 0.22 |
| $D_{10}$ [μm] | | 3 | | 3 |
| $D_{50}$ [mm] | | 0.8 | | 0.8 |
| $D_{90}$ [mm] | | 7,4 | | 7,4 |
| $d_{min}$ [μm] | | 0.2 | | 0.2 |
| $D_{max}$ [mm] | | 8 | | 8 |
| Excess paste thickness [μm] | | 24.56 | | 24.56 |
| Clinker content [%] | | 22.40 | | 22.40 |
| Fresh Density [kg/m³] (EN 12350-6:2019) | | 2,341 | | 2,341 |
| Flow table consistency [mm] (EN 1015-3:2007) | | 136 | | 125 |
| Viscosity [Pa•s] | | 162 | | 194 |
| Dynamic yield stress [Pa] | | 1,332 | | 1,097 |
| Static yield stress [Pa] | | 4,032 | | 3,762 |

The results show that both formulations n.1 and n.2 are able to satisfy the requirements for optimal printability mentioned previously:

- plastic viscosity in the range 120 - 300 Pa•s,
- dynamic yield stress in the range 750 - 1,800 Pa
- static yield stress $\geq$ 2,400 Pa.

Example 2

A comparative example is represented by formulation n.3, which was made similarly to the one described in patent application IT102018000020080, but extending the particle size distribution upwards, adding aggregates with a $D_{max}$ of 8 mm. A Dinger-Funk fitting resulted in a distribution modulus qD-F = 0.19, outside the present invention. Also the calculated excess paste thickness was outside the range of the present invention. For direct comparison, another formulation n.4 was made adopting instead a close qD-F, namely 0.20, and simultaneously applying the constraints related to clinker content and excess paste thickness of the present invention. The components and amounts as well as the measured parameters are listed in table 3.

Table 3

| Formulation | n.3 (comparative) | | n.4 (invention) | |
|---|---|---|---|---|
| **Main Components** | wt.-%* | Kg/m³ of concrete | wt.-%* | Kg/m³ of concrete |
| Cem I 52.5R Rezzato | 17.5 | 310.4 | - | - |
| Cem II/A-LL 42.5RCalusco | - | - | 30 | 637.4 |
| GGBFS | 17.5 | 310.4 | - | - |
| Filler Cremaschi | - | - | 10 | 212.5 |
| OmyaCarb 2AV | 15.0 | 266.1 | - | - |
| Sataf 107 | 14.0 | 248.3 | 10 | 212.5 |
| Sataf 117R | 10.0 | 177.4 | 15 | 318.7 |

(continued)

| Formulation | n.3 (comparative) | | n.4 (invention) | |
|---|---|---|---|---|
| **Main Components** | wt.-%* | Kg/m$^3$ of concrete | wt.-%* | Kg/m$^3$ of concrete |
| Sataf 103 | 6.0 | 106.4 | 20 | 425.0 |
| Sataf 109 | 20.0 | 354.8 | 15 | 318.7 |
| **Admixtures** | wt.-%** | Kg/m$^3$ of concrete | wt.-%** | Kg/m$^3$ of concrete |
| Melflux 2641F | 0.064 | 1.135 | 0.055 | 1.169 |
| Tylose MH60004P6 | 0.010 | 0.177 | 0.0085 | 0.181 |
| Starvis 3040F | 0.060 | 1.064 | 0.050 | 1.062 |
| **Water** | wt.-%*** | Kg/m$^3$ of concrete | wt.-%*** | Kg/m$^3$ of concrete |
| Water | 15.00 | 266.1 | 10.35 | 219.9 |
| **properties** | | | | |
| $q_{D-F}$ [-] | | 0.19 | 0.20 | |
| $D_{10}$ [$\mu$m] | | 2 | 3 | |
| $D_{50}$ [mm] | | 0.1 | 0.6 | |
| $D_{90}$ [mm] | | 7,2 | 7,2 | |
| $D_{min}$ [$\mu$m] | | 0.2 | 0.2 | |
| $D_{max}$ [mm] | | 8 | 8 | |
| Excess paste thickness [$\mu$m] | | 84.18 | 26.84 | |
| Clinker content [%] | | 16.63 | 24.00 | |
| Fresh Density [kg/m$^3$] (EN 12350-6:2019) | | 2,041 | 2,345 | |
| Flow table consistency [mm] (EN 1015-3:2007) | | 133 | 123 | |
| Viscosity [Pa•s] | | 117 | 161 | |
| Dynamic yield stress [Pa] | | 391 | 1,295 | |
| Static yield stress [Pa] | | 3,183 | 9,351 | |

Surprisingly, even though formulation n.3 had a flow table consistency similar to the one found for formulation n.1 of example 1, the requirements in terms of plastic viscosity, dynamic and static yield stress were not met. In fact, as reported in table 3, only formulation n.4 exhibited values compliant with the ranges identified as suitable for good printability.

Example 3

The formulations n.5 and n.6 were made in the same way according to the present invention, except the fact that n.5 had an hydraulic binder which is a CEM II/A-LL 42.5R containing the same clinker used for the production of CEM I 52.5R, which in turn has been used for n.6. The individual effect of the clinker amount variation did not alter the printability of the material, as the properties listed in table 4 are satisfactory for both the formulations.

Table 4

| formulation | n.5 | | n.6 | |
|---|---|---|---|---|
| **Main Components** | wt.-%* | Kg/m$^3$ of concrete | wt.-%* | Kg/m$^3$ of concrete |
| Cem I 52.5R Calusco | - | - | 20 | 428.5 |
| Cem II/A-LL 42.5R Calusco | 20 | 428.5 | - | - |
| Filler Cremaschi | 10 | 214.2 | 10 | 214.2 |

(continued)

| formulation | n.5 | | n.6 | |
|---|---|---|---|---|
| **Main Components** | wt.-%* | Kg/m$^3$ of concrete | wt.-%* | Kg/m$^3$ of concrete |
| Sataf 107 | 14 | 299.9 | 14 | 299.9 |
| Sataf 117F | 22 | 471.3 | 22 | 471.3 |
| Sataf 113 | 20 | 428.5 | 20 | 428.5 |
| Sataf 109 | 14 | 299.9 | 14 | 299.9 |
| **Admixtures** | wt.-%** | Kg/m$^3$ of concrete | wt.-%** | Kg/m$^3$ of concrete |
| Melflux 2641F | 0.055 | 1.178 | 0.055 | 1.178 |
| Tylose MH60004P6 | 0.0085 | 0.182 | 0.0085 | 0.182 |
| Starvis 3040F | 0.050 | 1.066 | 0.050 | 1.066 |
| **Water** | wt.-%*** | Kg/m$^3$ of concrete | wt.-%*** | Kg/m$^3$ of concrete |
| Water | 9 | 192.8 | 9 | 192.8 |
| **properties** | | | | |
| $q_{D-F}$ [-] | 0.23 | | 0.23 | |
| $D_{10}$ [$\mu$m] | 4 | | 4 | |
| $D_{50}$ [mm] | 0.5 | | 0.5 | |
| $D_{90}$ [mm] | 7,1 | | 7,2 | |
| $D_{min}$ [$\mu$m] | 0.2 | | 0.2 | |
| $D_{max}$ [mm] | 8 | | 8 | |
| Excess paste thickness [$\mu$m] | 6.09 | | 6.09 | |
| Clinker content [%] | 16.00 | | 20.00 | |
| Fresh Density [kg/m$^3$] (EN 12350-6:2019) | 2,335 | | 2,335 | |
| Flow table consistency [mm] (EN 1015-3:2007) | 124 | | 120 | |
| Viscosity [Pa•s] | 147 | | 120 | |
| Dynamic yield stress [Pa] | 1,265 | | 1,145 | |
| Static yield stress [Pa] | 6,119 | | 8,237 | |

Example 4

The formulation n.7 was designed with the same parameters adopted for the formulations n.5 and n.6 reported in example 3, but substituting the hydraulic binder with a calcium sulfoaluminate cement. The amounts and measured properties are listed in table 5.

Table 5

| Main components | wt.-%* | Kg/m$^3$ of concrete |
|---|---|---|
| i.tech Alicem Green | 20 | 449.5 |
| Filler Cremaschi | 10 | 224.8 |
| Sataf 107 | 14 | 314.7 |
| Sataf 117F | 22 | 494.5 |
| Sataf 113 | 20 | 449.5 |
| Sataf 109 | 14 | 314.7 |

(continued)

| Admixtures | wt.-%** | Kg/m$^3$ of concrete |
|---|---|---|
| Melflux 2641 F | 0.055 | 1.178 |
| Tylose MH60004P6 | 0.0085 | 0.182 |
| Starvis 3040F | 0.050 | 1.066 |
| **Water** | wt.-%*** | Kg/m$^3$ of concrete |
| Water | 9 | 199.8 |
| **Properties** | | |
| $q_{D-F}$ [-] | 0.23 | |
| $D_{10}$ [$\mu$m] | 4 | |
| $D_{50}$ [mm] | 0.5 | |
| $D_{90}$ [mm] | 7,1 | |
| $D_{min}$ [$\mu$m] | 0.1 | |
| $D_{max}$ [mm] | 8 | |
| Excess paste thickness [$\mu$m] | 6.09 | |
| Clinker content [%] | 16.00 | |
| Fresh Density [kg/m$^3$] (EN 12350-6:2019) | 2,450 | |
| Flow table consistency [mm] (EN 1015-3:2007) | 120 | |
| Viscosity [Pa•s] | 262 | |
| Dynamic yield stress [Pa] | 932 | |
| Static yield stress [Pa] | 17,101 | |

The material satisfied the requirements, and exhibited a surprisingly high static yield stress, resulting in an enhanced buildability, and advantageously maintained similar flow properties and pumpability. Moreover, after 15 minutes, the material was hardened and could withstand considerable compressive and flexural loads.

Example 5

The formulation n.8 was made adopting the high end of the distribution modulus qD-F according to the present invention, and simultaneously applying the constraints related to clinker content and excess paste thickness. In contrast, despite having an excess paste thickness and a clinker content similar to formulations n.5 and n.6 (reported in Example 4), the formulation n.9 was made with a distribution modulus qD-F higher than the upper end of the range according to the invention. The amounts and measured properties are listed in table 6.

Table 6

| Formulation | n.8 (invention) | | n.9 (comparison) | |
|---|---|---|---|---|
| **Main Components** | wt.-%* | Kg/m$^3$ of concrete | wt.-%* | Kg/m$^3$ of concrete |
| Cem II/A-LL 42.5R Calusco | 20 | 428.5 | 22.5 | 499.5 |
| Filler Cremaschi | 10 | 214.2 | - | - |
| Sataf 113 | - | - | 16 | 355.2 |
| Sataf 107 | 17 | 364.2 | 23 | 510.6 |
| Sataf 117F | 16 | 342.8 | 14.5 | 321.9 |
| Sataf 103 | 20 | 428.5 | 11 | 244.2 |
| Sataf 109 | 17 | 364.2 | 13 | 288.6 |

(continued)

| Admixtures | wt.-%** | Kg/m$^3$ of concrete | wt.-%** | Kg/m$^3$ of concrete |
|---|---|---|---|---|
| Melflux 2641F | 0.0468 | 1.003 | 0.0468 | 1.039 |
| Tylose MH60004P6 | 0.0085 | 0.182 | 0.0085 | 0.189 |
| Starvis 3040F | 0.0425 | 0.911 | 0.0425 | 0.944 |
| **Water** | wt.-%*** | Kg/m$^3$ of concrete | wt.-%*** | Kg/m$^3$ of concrete |
| Water | 9 | 192.8 | 9 | 199.8 |
| **properties** | | | | |
| $q_{D-F}$ [-] | | 0.28 | | 0.31 |
| $D_{10}$ [$\mu$m] | | 4 | | 9 |
| $D_{50}$ [mm] | | 1.0 | | 1.0 |
| $D_{90}$ [mm] | | 7,5 | | 7,0 |
| $D_{min}$ [$\mu$m] | | 0.2 | | 0.2 |
| $D_{max}$ [mm] | | 8 | | 8 |
| Excess paste thickness [$\mu$m] | | 11.87 | | 7.56 |
| Clinker content [%] | | 16.00 | | 18.00 |
| Fresh Density [kg/m$^3$] (EN 12350-6:2019) | | 2,335 | | 2,420 |
| Flow table consistency [mm] (EN 1015-3:2007) | | 124 | | 110 |
| Viscosity [Pa•s] | | 174 | | 512 |
| Dynamic yield stress [Pa] | | 1,343 | | 1,162 |
| Static yield stress [Pa] | | 7,069 | | 11,608 |

As can be seen in table 6, only formulation n.8 met the requirements, while n.9 had poor flow properties, resulting in almost impossible processing.

**Claims**

1. Cementitious mixture comprising a hydraulic cement, a filler, and aggregate with a maximum size above 2 mm, wherein the mixture has a Dinger-Funk particle size distribution modulus qD-F in the range from 0.20 to 0.30, a hydraulic cement content from 1 to 40 wt.-% with respect to the total dry mixture weight, and no combination of clay and silica fume is contained.

2. Concrete composition comprising a hydraulic cement, a filler, aggregate with a maximum size above 2 mm, and water, wherein the composition has a Dinger-Funk particle size distribution modulus qD-F in the range from 0.20 to 0.30, an excess paste thickness in the range from 5 to 35 $\mu$m, a cement content from 1 to 40 wt.-% with respect to the total weight of dry components, and no combination of clay and silica fume is contained.

3. Concrete composition according to claim 2, wherein the excess paste thickness is 10 - 27 $\mu$m and/or a water/solid weight ratio ranges from 0.05 to 0.15, preferably from 0.06 to 0.13, most preferred from 0.08 to 0.11.

4. Cementitious mixture according to claim 1 or concrete composition according to claim 2 or 3, wherein the Dinger-Funk particle size distribution modulus $q_{D-F}$ ranges from 0.20 to 0.25, preferably from 0.20 to 0.23.

5. Cementitious mixture according to claim 1 or 4 or concrete composition according to one of claims 2 to 4, wherein the aggregate has a maximum size above 4 mm and/or $D_{max}$ is $\leq$ 20 mm, preferably $\leq$ 12 mm, most preferred $\leq$ 8 mm.

6. Cementitious mixture according to one of claims 1, 4 to 5 or concrete composition according to one of claims 2 to 5, wherein the aggregate comprises a coarse fraction with a minimum size $d_{min} \geq 1$ mm, preferably $\geq 2$ mm, most preferred $\geq 4$ mm and a fine fraction with a $D_{max} \leq 4$ mm, preferably $\leq 2$ mm and/or a $d_{min} \geq 0.1$ mm, preferably $\geq 0.25$ mm.

7. Cementitious mixture according to one of claims 1 or 4 to 6 or concrete composition according to one of claims 2 to 5, wherein the hydraulic cement content ranges from 10 - 35 wt.-%, preferably from 15 - 30 wt.-%, and/or the hydraulic cement is selected from Portland cement clinker based cement, sulfoaluminate cement, aluminous cement, fast natural cement, and mixtures thereof, preferably from Portland cement clinker based Cement CEM I or CEM II, sulfoaluminate cement, and mixtures thereof.

8. Cementitious mixture according to one of claims 1 or 4 to 7 or concrete composition according to one of claims 2 to 7, wherein the filler is selected from limestone, siliceous or silico-calcareous fillers, more preferably is a limestone filler and/or has a $D_{90}$ of 0.063 mm and preferably a $D_{10} < 1$ $\mu$m, preferably $\leq 0.5$ $\mu$m, more preferred $\leq 0.1$ $\mu$m.

9. Cementitious mixture according to one of claims 1 or 4 to 8 or concrete composition according to one of claims 2 to 8, wherein the mixture or composition further contains fibres, preferably polymeric fibres and/or metallic fibres.

10. Cementitious mixture according to one of claims 1 or 4 to 9 or concrete composition according to one of claims 2 to 9, wherein the mixture or composition further contains one or more superplasticisers, preferably selected from acrylic-based polycarboxylates, lignosulfonates, naphthalene sulfonates, melamine compounds, vinyl compounds, and mixtures thereof, most preferred an acrylic-based polycarboxylate.

11. Cementitious mixture according to one of claims 1 or 4 to 10 or concrete composition according to one of claims 2 to 10, wherein the mixture or composition further contains a rheology modifying agent, preferably at least two rheology modifying agents forming a rheology modifying system comprising 1) one or more rheology modifying agents having a pseudo plastic behavior, preferably selected from starch derivatives, vinyl-acetate, vinyl-versatate, cellulose, cellulose derivatives, and mixtures thereof, most preferred cellulose derivatives, and 2) high-molecular weight polymers, preferably selected from polyamides most preferred a polyamide with substituted amide nitrogen, having a molecular weight ranging from $2 \cdot 10^6$ Da to $2 \cdot 10^7$ Da, preferably from $2 \cdot 10^6$ Da to $5 \cdot 10^6$ Da.

12. Cementitious mixture or concrete composition according to claim 11, wherein the superplasticiser and the rheology modifying system are both present, and their weight ratio ranges from 0.5 to 2.2, preferably from 0.7 to 1.3.

13. Cementitious mixture according to one of claims 1 or 4 to 12 or concrete composition according to one of claims 2 to 12, wherein the mixture or composition further contains one or more admixtures selected from setting accelerators, hardening accelerators and setting retarders, preferably at least one setting or hardening accelerator selected from lithium carbonate, sodium carbonate, sodium chloride, aluminium hydroxide, lithium sulfate, calcium nitrate, calcium nitrite, most preferred from lithium carbonate and sodium carbonate.

14. Cementitious mixture according to one of claims 1 or 4 to 13 or concrete composition according to one of claims 2 to 13, wherein no combination of clay, silica fume and fly ash is contained or essentially no clay is contained.

15. Use of a cement mixture or a concrete composition according to one of claims 1 to 14 for producing buildings and building elements by 3D printing, wherein

   i) the cement mixture is mixed with water to provide a concrete composition with an excess paste thickness from 5 to 35 $\mu$m,
   ii) the concrete composition is fed to a 3D printing device;
   iii) the concrete composition extruded from a nozzle of the 3D printing device, thereby depositing the concrete composition onto a substrate in a layer with a predetermined shape of the layer in a 3D model
   iv) steps ii) and iii) are repeated until the 3D model is printed by the deposition of consecutive layers of the concrete composition.

16. Method for producing buildings and building elements by 3D printing of the cement mixture or concrete composition according to one of claims 1 to 14, comprising the steps of

   i) providing the cementitious mixture according to the invention and mixing with water to provide a concrete composition with an excess paste thickness from 5 to 35 $\mu$m, or providing the concrete composition according to the invention,
ii) feeding the concrete composition to a 3D printing device,
iii) extrusion of the concrete composition from a nozzle of the 3D printing device and depositing the concrete composition onto a substrate in a layer with a predetermined arrangement of the concrete composition in the layer according to a 3D model,
iv) repeating step iii) until the 3D model is printed by the deposition of consecutive layers of the concrete composition.

17. Method according to claim 16, wherein the 3D model is obtained by creation as 3D CAD object, sectioning into layers and storing the map of each layer and/or the 3D model is maintained in the form of digital data converted into instructions for the 3D printing device and stored in a controller which positions the nozzle for deposition of the concrete composition, controls the flow of the concrete composition through the nozzle, i.e. the amount deposited, and adjusts the time until the next layer is printed.

18. Use according to claim 15 or method according to claim 16 or 17, wherein the substrate is a foundation in case of a building and is a support in case of a building element, and/or the building element is a wall, floor, stair, all of them with appropriate openings/ducts for pipes and wires, or a slab, pillar, post, plate, block, tube, arch, pavement, table, bench, fountain basin, plant container, or ornamental object.

Fig. 1

Fig. 3

Fig. 2

Fig. 4

Europäisches
Patentamt

European
Patent Office

Office européen
des brevets

# EUROPEAN SEARCH REPORT

Application Number

EP 21 17 9062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OURO KOURA BABA-ISSA ET AL: "A new proportioning approach of low and normal binder self-consolidating concrete based on the characteristics of fine mortar and granular skeleton", CONSTRUCTION AND BUILDING MATERIALS, ELSEVIER, NETHERLANDS, vol. 239, 23 December 2019 (2019-12-23), XP086075808, ISSN: 0950-0618, DOI: 10.1016/J.CONBUILDMAT.2019.117892 [retrieved on 2019-12-23] * Chapters 2.1, 2.2.1, 3.4, 4; examples N3, N4, E3, E4; tables 1,3 * | 1-14 | INV. B33Y70/00 B33Y80/00 C04B28/04 C04B28/06 |
| X | ALI ZEINAB SAYED ET AL: "New aggregate grading models for low-binder self-consolidating and semi-self-consolidating concrete (Eco-SCC and Eco-semi-SCC)", CONSTRUCTION AND BUILDING MATERIALS, ELSEVIER, NETHERLANDS, vol. 265, 3 August 2020 (2020-08-03), XP086339011, ISSN: 0950-0618, DOI: 10.1016/J.CONBUILDMAT.2020.120314 [retrieved on 2020-08-03] * Chapters 1, 2.1, 2.2, 2.4, 2.5, 3.1.1, 3.2.2, 4; equations (4) and (10); figure 1; examples M3, M11; tables 1, 2, 6,9, 13 * | 1-14 | |
| X | CN 111 233 407 B (UNIV HEBEI TECHNOLOGY) 18 December 2020 (2020-12-18) * example 2 * * "Detailed Ways" * * page 3 - paragraphs 9,11; claims 1-3 * | 1-18 | TECHNICAL FIELDS SEARCHED (IPC) B33Y C04B |

-/--

The present search report has been drawn up for all claims

| Place of search | Date of completion of the search | Examiner |
|---|---|---|
| The Hague | 4 November 2021 | Büscher, Olaf |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

Application Number

EP 21 17 9062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/030256 A1 (SIKA TECH AG [CH]) 14 February 2019 (2019-02-14) * page 15, lines 13-20 * * page 3, line 22 - page 11, line 17 * * page 14, line 8 - page 15, line 11 * * page 16, line 30 - page 19, line 12; claims 1-15 * ----- | 1,11,12, 15,16 | |
| A | ZHANG HONG-PING ET AL: "Preparation of Rapid-Hardening, Early-Strengthening, High-Density Composite Cement Based on Dinger-Funk Equation", ARABIAN JOURNAL FOR SCIENCE AND ENGINEERING, SPRINGER BERLIN HEIDELBERG, BERLIN/HEIDELBERG, vol. 45, no. 5, 23 November 2019 (2019-11-23), pages 3719-3730, XP037095624, ISSN: 2193-567X, DOI: 10.1007/S13369-019-04217-7 [retrieved on 2019-11-23] * the whole document * ----- | 1-18 | |

TECHNICAL FIELDS SEARCHED (IPC)

The present search report has been drawn up for all claims

| Place of search | Date of completion of the search | Examiner |
|---|---|---|
| The Hague | 4 November 2021 | Büscher, Olaf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 17 9062

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2021

| Patent document cited in search report | | Publication date | Patent family member(s) | | Publication date |
|---|---|---|---|---|---|
| CN 111233407 | B | 18-12-2020 | NONE | | |
| WO 2019030256 | A1 | 14-02-2019 | AU | 2018314761 A1 | 20-02-2020 |
| | | | CN | 110997261 A | 10-04-2020 |
| | | | EP | 3600811 A1 | 05-02-2020 |
| | | | SG | 11202000999X A | 30-03-2020 |
| | | | US | 2020148594 A1 | 14-05-2020 |
| | | | WO | 2019030256 A1 | 14-02-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3421201 A1
- WO 2018128791 A1
- US 20190009428 A1
- US 201800574054 A1
- GB 204722006 A
- EP 812811 A1
- US 20130233207 A1
- WO 2013023728 A2
- US 20140364543 A1
- IT 102018000020080

**Non-patent literature cited in the description**

- **FULLER, W.B. ; THOMPSON, S.E.** The laws of proportioning concrete. *ASCE J. Transport.,* 1907, vol. 59, 67-143
- **ANDREASEN, A.H.M. ; ANDERSEN, J.** Uber die Beziehung zwischen Kornabstufung und Zwischenraum in Produkten aus losen Körnern (mit einigen Experimenten). *Colloid Polym. Sci.,* 1930, vol. 50 (3), 217-228
- **REINHARDT et al.** About the influence of the cement content and composition of the aggregates on the rheological behaviour of self-compacting concrete. *Materials and Structures,* 2006, vol. 39, 683-693
- Introduction to predictive process control. **J.E. FUNK ; D.R. DINGER.** Predictive process control of crowded particulate suspensions. Springer, 1994, 1-16
- **R. SARKAR.** Particle Size Distribution for Refractory Castables: A Review. *Interceram,* 2016, vol. 65 (3), 82-86